# EUROPÄISCHE PATENTSCHRIFT

(11) **EP 1 013 978 B1**
(45) Veröffentlichungstag und Bekanntmachung des Hinweises auf die Patenterteilung: **23.06.2004**
(21) Anmeldenummer: 99120551.9
(22) Anmeldetag: 15.10.1999
(51) Int. Cl.: F16L 3/237

(54) **Befestigungselement aus Kunststoff**
Plastic fastening device
Dispositif de fixation en matière plastique

(30) Priorität: 15.12.1998 DE 19857853
(43) Veröffentlichungstag der Anmeldung: 28.06.2000
(73) Patentinhaber: TRW Automotive Electronics & Components GmbH & Co. KG, 67677 Enkenbach/Alsenborn (DE)
(72) Erfinder: Brumm, Matthias, 67657 Kaiserslautern (DE)
(74) Vertreter: Schieschke, Klaus, Dipl.-Ing.

(56) Entgegenhaltungen:
- EP-A- 0 779 439
- DE-U- 29 620 300
- FR-A- 2 551 174
- GB-A- 1 147 914
- US-A- 5 316 245

## Beschreibung

Die Erfindung bezieht sich auf ein Befestigungselement aus Kunststoff, mit einem mittleren Haltebereich, welcher oberseitig einen unter Druckeinwirkung einen Hauptkörper zumindest teilweise durchdringenden Bolzen aufweist und mit ein- oder beidseitig des Haltebereichs angeordneten Lagerbereichen zur Aufnahme von Rohren oder Kabeln.

Als Stand der Technik ist bereits ein derartiges Befestigungselement bekannt, welches so ausgestaltet ist, dass der Bolzen beim Durchdringen des Hauptkörpers auf einen Gewindezapfen aufgeschlagen wird und so die Verbindung zwischen einem Träger und dem Befestigungselement herstellt (DE 3 029 975 A1). Bei dieser bekannten Konstruktion dient damit der Bolzen als Verbindung zwischen dem Befestigungselement und einem Träger. Weist beispielsweise dieser Träger eine abzudichtende Öffnung auf, so kann dieses bekannte Befestigungselement nicht eingesetzt werden.

Weiterer Stand der Technik ist ein Befestigungselement aus Kunststoff, mit einem Basisteil, welches eine zylindrische Öffnung aufweist, in die ein Lagerteil einlagerbar ist (DE 36 15 488 A1). Das Lagerteil ist auf einen Gewindebolzen aufdrückbar, wobei das Befestigungselement an dem Gewindebolzen gehalten wird. Auch hier besteht keine Möglichkeit, das bekannte Befestigungselement beispielsweise gegen eine Trägeröffnung abzusichern.

Zum Stand der Technik zählt darüber hinaus ein zweiteiliges Halteelement aus Kunststoff zur Halterung mindestens eines rohrförmigen Teils mit einer an einem Träger über einen Haltebereich befestigbare Außenschale aus hartem Material und einer darin eingesetzten Innenschale aus weichem Material (DE 4 034 545 A1). Bei dieser bekannten Konstruktion ist die Innenschale jeweils beidseitig der Lagerstelle über eine Verankerung an der Außenschale befestigt, wobei zwischen der Innenschale und der Außenschale im Bereich der Lagerstelle eine durchgehende Freiarbeitung vorhanden ist.

Im Gegensatz zu dem vorgenannten Stand der Technik besteht bei der vorliegenden Erfindung die Aufgabe, ein Befestigungselement der eingangs genannten Art zu schaffen, welches in der Lage ist, bei sicherer Befestigung an einer Trägeröffnung eine gute Abdichtung zu gewährleisten und außerdem neben einem vorteilhaften Toleranzausgleich auch eine weitgehende Dämpfung der in den Lagerbereichen gehalterten Rohre oder Kabel zu ermöglichen.

Diese Aufgabe wird erfindungsgemäß dadurch gelöst, dass der Hauptkörper, der Bolzen und jeweils eine äußere Schale aus einer harten Materialkomponente und ein Innenkern, ein in eine Trägeröffnung einsetzbarer Spreizzapfen und jeweils eine innere Schale aus einer weichen Materialkomponente bestehen. Vorteilhafterweise können die beiden Materialkomponenten im mindestens Zwei-Komponenten-Spritzverfahren in einem Arbeitsgang hergestellt werden, so dass sich eine kostensparende Produktion ergibt. Auch ein Drei-Komponenten-Spritzverfahren ist möglich und anwendbar.

Durch die Verwendung zweier Materialkomponenten wird einerseits ein sehr sicheres Befestigungselement geschaffen, welches jedoch an besonders sensiblen Stellen durch Einsatz der weichen Materialkomponente zum einen eine Dichtfunktion und zum anderen Dämpfungsfunktion auszuüben vermag.

In weiterer Ausgestaltung der Erfindung kann der Spreizzapfen eine Ausnehmung aufweisen, in welcher sich ein Spreizelement aus der harten Materialkomponente befindet, das eine geschlitzte Öffnung aufweist, in die der Bolzen unter Druckeinwirkung zumindest teilweise einlagerbar ist. Durch das Zusammenwirken des Spreizzapfens und des Bolzens wird damit eine sichere Befestigung in einer Trägeröffnung gewährleistet, wobei außerdem eine optimale Dichtwirkung erzielt wird.

Der Innenkern kann in weiterer Ausgestaltung der Erfindung kreuzförmig ausgebildet sein mit einem senkrechten und einem waagerechten Bereich, wobei der senkrechte Bereich oberseitig von einer Platte des Hauptkörpers überdeckt ist und unterseitig in den Spreizzapfen übergeht und an dem waagerechten Bereich beidseitig an je eine innere Schale des Lagerbereichs anschließt. Hierbei kann der Bolzen in einer Öffnung des Hauptkörpers eingelagert sein, wobei die Öffnung und die Ausnehmung des Spreizzapfens koaxial verlaufen.

Vorteilhafte Weiterbildungen ergeben sich aus den weiteren Unteransprüchen.

Die Erfindung wird nachfolgend anhand von in der Zeichnung dargestellten Ausführungsbeispielen näher beschrieben. In der Zeichnung zeigen:
- Fig. 1: eine schematische Vorderansicht eines Befestigungselements,
- Fig. 2: einen Schnitt nach der Linie II-II in Fig. 1,
- Fig. 3: eine andere Ausmhnmgsmöglichkeit des Spreizzapfens, teils gebrochen,
- Fig. 4: einen teilweise gebrochenen Mittelschnitt durch den Hauptkörper und den Spreizzapfen,
- Fig. 5: eine perspektivische Darstellung des Befestigungselements nach den Fig. 1 bis 4,
- Fig. 6: eine andere Ausgestaltung des Befestigungselements in perspektivischer Ansicht;

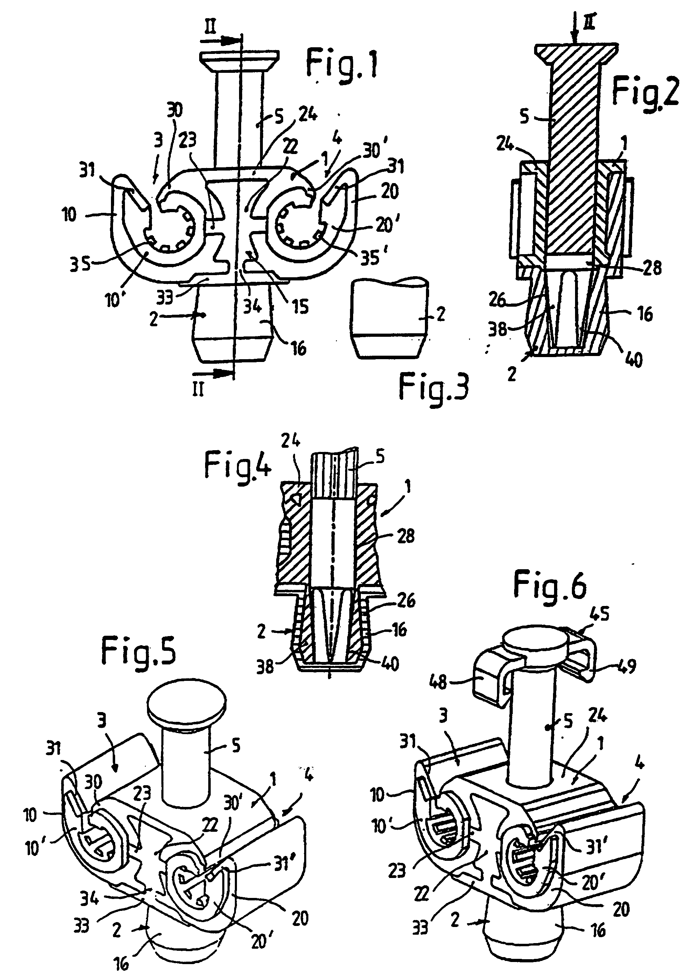

Das in den Fig. 1 bis 6 dargestellte Befestigungselement besteht aus einem Hauptkörper 1 mit einem mittleren Haltebereich 2, wobei der Hauptkörper 1 zumindest teilweise von einem Bolzen 5 durchdrungen ist. Beidseitig des Haltebereichs 2 sind Lagerbereiche 3 und 4 angeordnet, welche zur Aufnahme von nicht näher dargestellten Rohren, Kabeln oder anderen rohrförmigen Gegenständen geeignet ist.

Der Lagerbereich 3 bzw. 4 besteht aus einer äußeren Schale 10 und 20 und einer inneren Schale 10' und 20'. Unterhalb des Hauptkörpers 1 befindet sich ein Spreizzapfen 16, welcher in eine nicht näher dargestellte Trägeröffnung einsetzbar ist.

Aus den Fig. 1 und 3 geht hervor, dass der Hauptkörper 1, der Bolzen 5 und jeweils die äußere Schale 10 und 20 aus einer harten Materialkomponente bestehen, während ein Innenkern 15, der in die Trägeröffnung einsetzbare Spreizzapfen 16 und die inneren Schalen 10' und 20' aus einer weicheren Materialkomponente hergestellt sind. Vorteilhafterweise wird das gesamte Befestigungselement mit den beiden Materialkomponenten im mindestens Zwei-Komponenten-Spritzverfahren in einem einzigen Arbeitsgang hergestellt.

Es besteht auch die Möglichkeit des Einsatzes eines Drei-Komponenten-Spritzverfahrens, d. h. zwei weichere unterschiedliche und eine harte Materialkomponente.

Aus Fig. 2 und 4 geht hervor, dass der Spreizzapfen 16 eine Ausnehmung 26 aufweist. In dieser Ausnehmung 26 befindet sich ein Spreizelement 38 aus der harten Materialkomponente, wobei dieses Spreizelement 38 eine geschlitzte konische Öffnung 40 besitzt, in welche der Bolzen 5 unter Druckeinwirkung zumindest teilweise einlagerbar ist. Wird damit beispielsweise gemäß Fig. 2 der Bolzen 5 einer Druckeinwirkung I ausgesetzt, so gelangt ein Teil des Bolzens 5 in die geschlitzte konische Öffnung 40 und bewirkt damit ein Spreizen des Spreizzapfens 16, und zwar hinter der Trägeröffnung. Damit ist nicht nur eine sichere Befestigung an einem nicht näher dargestellten Träger hergestellt, sondern es wird auch eine sehr gute Dichtwirkung erzielt, da der Spreizzapfen 16 aus der weicheren Materialkomponente besteht.

Aus Fig. 1 und 5 ist ersichtlich, dass der Innenkern 15 kreuzförmig ausgebildet ist mit einem senkrechten Bereich 22 und einem waagerechten Bereich 23. Der senkrechte Bereich 22 ist oberseitig von einer Platte 24 des Hauptkörpers 1 überdeckt und geht unterseitig in den Spreizzapfen 16 über. An den waagerechten Bereich 23 schließen sich beidseitig je die innere Schale 10' und 20' des Lagerbereichs 3 bzw. 4 an.

Gemäß Fig. 2 und 4 ist der Bolzen 5 in eine Öffnung 28 des Hauptkörpers 1 eingelagert, wobei die Öffnung 28 und die Ausnehmung 26 des Spreizzapfens 16 koaxial verlaufen.

Der Spreizzapfen 16 muss nicht die in Fig. 1 und 5 dargestellte konische Form aufweisen; nach Fig. 3 besteht auch die Möglichkeit, dass der Spreizzapfen zylindrisch ausgebildet ist. Weiterhin kann auch der Bolzen 5 rechteckig, oval oder eine beliebige andere Konfiguration aufweisen, wobei jedoch sichergestellt sein muss, dass die Öffnung 28 dementsprechend ausgebildet ist.

Insbesondere aus Fig. 1 und 5 geht hervor, dass die äußere Schale 10 und 20 des Lagerbereichs 3 bzw. 4 die jeweilige innere Schale 10' bzw. 20' mit Abschlussflächen 30 und 31 bzw. 30' und 31' überdeckt. Damit ist die weichere Materialkomponente der jeweiligen inneren Schale 10' und 20' geschützt und ein Rohr, ein Kabel oder ein rohrförmiger Gegenstand kann durch die konisch zulaufende Einschubzone in die entsprechende innere Schale 10' bzw. 20' eingedrückt werden.

Die innere Schale 10' und 20' kann jeweils im Bereich der zu halternden Rohre oder Kabel oder rohrförmigen Gegenstände mit Profilierungen 35 bzw. 35' versehen sein, welche beispielsweise als im Abstand voneinander liegende längsverlaufende Rippen ausgebildet sind. Diese Profilierungen können jedoch auch eine andere Konfiguration aufweisen und an die entsprechend zu halternden Rohre oder Kabel oder rohrförmigen Gegenstände angepasst sein. Aus Fig. 5 geht hervor, dass die inneren Schalen 10' und 20' beidseitig den Hauptkörper 1 überragen. Aus Fig. 1 ist darüber hinaus ersichtlich, dass der Spreizzapfen 16 im oberen Bereich in eine Abschlussplatte 33 mit einer darüber angeordneten Einschnürung 34 übergeht.

Bei der Ausführungsform von Fig. 1 bis 5 ist der ohne Verriegelung gestaltete Bolzen 5 mit einem oberen Abschlussflansch versehen. Nach Fig. 6 besteht auch die Möglichkeit, dass der Bolzen 5 mit mindestens einer Verriegelung 45 ausgestattet ist. Diese Verriegelung 45 kann beispielsweise aus zwei gegenüberliegenden Hakenelementen 48 und 49 bestehen, welche bei in die geschlitzte konische Öffnung 40 des Spreizelements 38 eingelagerten Bolzen 5, d. h. im montierten Zustand in einer Trägeröffnung, die Platte 24 des Hauptkörpers 1 hintergreifen, so dass der Bolzen 5 funktionssicher im eingebauten Zustand verriegelt ist.

Das erfindungsgemäße Befestigungselement ist schnell und kostensparend herstellbar, weist eine hohe Effektivität auf und ist in der Lage, neben einer guten Dämpfungswirkung für die zu halteraden Rohre, Kabel oder rohrförmigen Gegenstände auch eine Abdichtwirkung gegenüber einer Trägeröffnung herzustellen.

## Patentansprüche

1. Befestigungselement aus Kunststoff, mit einem mittleren Haltebereich (2), welche oberseitig einen unter Druckeinwirkung einen Hauptkörper (1) zumindest teilweise durchdringenden Bolzen (5) aufweist und mit ein- oder beidseitig des Haltebereichs (2) angeordneten Lagerbereichen (3, 4) zur Aufnahme von Rohren oder Kabeln,
**dadurch gekennzeichnet,**
**dass** der Hauptkörper (1), der Bolzen (5) und jeweils eine äußere Schale (10, 20) aus einer harten Materialkomponente und ein Innenkern (15), ein in eine Trägeröffnung einsetzbarer Spreizzapfen (16) und jeweils eine innere Schale (10', 20') aus einer weichen Materialkomponente bestehen.

2. Befestigungselement nach Anspruch 1**, dadurch gekennzeichnet, dass** der Spreizzapfen (16) eine Ausnehmung (26) aufweist, in welcher sich ein Spreizelement (38) aus der harten Materialkomponente befindet, das eine geschlitzte Öffnung (40) aufweist, in die der Bolzen (5) unter Druckeinwirkung zumindest teilweise einlagerbar und konisch, zylindrisch, rechteckig oder polygonal ausgebildet ist.

3. Befestigungselement nach Anspruch 1 oder 2, **dadurch gekennzeichnet, dass** der Innnenkern (15) kreuzförmig ausgebildet ist mit einem senkrechten und einem waagerechten Bereich (22, 23), wobei der senkrechte Bereich (22) oberseitig von einer Platte (24) des Hauptkörpers (1) überdeckt ist und unterseitig in den Spreizzapfen (16) übergeht und an den waagerechten Bereich (23) beidseitig je eine der inneren Schalen (10', 20') des Lagerbereichs (3, 4) anschließen.

4. Befestigungselement nach einem oder mehreren der vorhergehenden Ansprüche, **dadurch gekennzeichnet, dass** der Bolzen (5) in einer Öffnung (28) des Hauptkörpers (1) eingelagert ist, wobei die Öffnung (28) und die Ausnehmung (26) des Spreizzapfens (15) koaxial verlaufen.

5. Befestigungsvorrichtung nach einem oder mehreren der vorhergehenden Ansprüche, **dadurch gekennzeichnet, dass** die äußere Schale (10, 20) des Lagerbereichs (3, 4) die jeweilige innere Schale (10', 20') mit Abschlussflächen (30, 31; 30', 31') übergreift.

6. Befestigungsvorrichtung nach Anspruch 5, **dadurch gekennzeichnet, dass** die innere Schale (10', 20') jeweils im Bereich der zu halternden Rohre oder Kabel mit Profilierungen (35, 35') versehen ist.

7. Befestigungsvorrichtung nach Anspruch 5 und 6, **dadurch gekenndchnet,** dass die inneren Schalen (10', 20') beidseitig in derselben Ebene des Hauptkörpers (1) liegen, oder diesen überragen oder demgegenüber zurückgesetzt sind.

8. Befestigungsvorrichtung nach Anspruch 2, **dadurch gekennzeichnet, dass** der Spreizzapfen (16) konisch, zylindrisch oder geschlitzt ausgebildet ist.

9. Befestigungsvorrichtung nach einem oder mehreren der vorhergehenden Ansprüche, **dadurch gekennzeichnet, dass** der Spreizzapfen (16) im oberen Bereich in eine Abschlussplatte (33) mit einer darüber angeordneten Einschnürung (34) übergeht.

10. Befestigungsvorrichtung nach einem oder mehreren der vorhergehenden Ansprüche, **dadurch gekennzeichnet, dass** der Bolzen (5) mit mindestens einer Verriegelung (45) versehen ist.

11. Befestigungsvorrichtung nach Anspruch 10, **dadurch gekennzeichnet, dass** die Verriegelung (45) aus zwei gegenüberliegenden Haken (48, 49) besteht, welche bei in die geschlitzte konische Öffnung (40) des Spreizelements (48) eingelagertem Bolzen (5) die Platte (24) des Hauptkörpers (1) hintergreifen.

12. Befestigungsvorrichtung nach einem oder mehreren der vorhergehenden Ansprüche, **dadurch gekennzeichnet, dass** die zwei Materialkomponenten im mindestens Zwei-Komponenten-Spritzverfahren in einem Arbeitsgang herstellbar sind.

## Claims

1. Plastic fastening element, having a central holding region (2) which has, on the upper side, a bolt (5) which at least partially penetrates a main body (1) under the effect of pressure, and having bearing regions (3, 4), which are arranged on one or both sides of the holding region (2), for accommodating pipes or cables, **characterized in that** the main body (1), the bolt (5) and a respective outer shell (10, 20) consist of a hard material component, and an inner core (15), an expanding stud (16), which can be inserted into a support opening, and a respective inner shell (10', 20') consist of a soft material component.

2. Fastening element according to Claim 1, **characterized in that** the expanding stud (16) has a recess (26) in which an expanding element (38) of the hard material component is situated, the said expanding element having a slit opening (40) into which the bolt (5), which is of conical, cylindrical, rectangular or polygonal design, can be at least partially embedded under the action of pressure.

3. Fastening element according to Claim 1 or 2, **characterized in that** the inner core (15) is of cross-shaped design with a vertical and a horizontal region (22, 23), the vertical region (22) being covered on the upper side by a plate (24) of the main body (1) and merging on the lower side into the expanding stud (16), and one of the inner shells (10', 20') of the bearing region (3, 4) adjoining the horizontal region (23) on both sides.

4. Fastening element according to one or more of the preceding claims, **characterized in that** the bolt (5) is embedded in an opening (28) of the main body (1), the opening (28) and the recess (26) of the expanding stud (15) running coaxially.

5. Fastening device according to one or more of the preceding claims, **characterized in that** the outer shell (10, 20) of the bearing region (3, 4) engages over the respective inner shell (10', 20') with closing surfaces (30, 31; 30', 31').

6. Fastening device according to Claim 5, **characterized in that** the inner shell (10', 20') is provided with profilings (35, 35') in each case in the region of the pipes or cables to be secured.

7. Fastening device according to Claims 5 and 6, **characterized in that** the inner shells (10', 20') lie on both sides in the same plane of the main body (1), or protrude over the latter or are set back with respect thereto.

8. Fastening device according to Claim 2, **characterized in that** the expanding stud (16) is of conical, cylindrical or slit design.

9. Fastening device according to one or more of the preceding claims, **characterized in that** the expanding stud (16) merges in the upper region into a closing plate (33) having a constriction (34) arranged above it.

10. Fastening device according to one or more of the preceding claims, **characterized in that** the bolt (5) is provided with at least one lock (45).

11. Fastening device according to Claim 10, **characterized in that** the lock (45) comprises two opposite hooks (48, 49) which, with the bolt (5) embedded in the slit, conical opening (40) of the expanding element (48), engage behind the plate (24) of the main body (1).

12. Fastening device according to one or more of the preceding claims, **characterized in that** the two material components can be produced in one working step in the at least two-component injection-moulding process.

## Revendications

1. Elément de fixation en matière plastique, comportant une zone de retenue médiane (2) qui présente sur la face supérieure un boulon (5) traversant sous l'effet de pression au moins partiellement un corps principal (1), et des zones de palier (3, 4) agencées d'un ou des deux côtés de la zone de retenue, pour recevoir des tubes ou des câbles, **caractérisé en ce que**
le corps principal (1), le boulon (5) et une coque extérieure (10, 20) respective sont constitués par un composant en matériau dur et un noyau intérieur (15), un tourillon à expansion (16), susceptible d'être inséré dans une ouverture de support, et une coque intérieure (10', 20') respective sont constitués par un composant en matériau tendre.

2. Elément de fixation selon la revendication 1, **caractérisé en ce que** le tourillon à expansion (16) présente un évidement (26) dans lequel se trouve un élément à expansion (38) constitué par le composant en matériau dur et qui présente une ouverture (40) fendue dans laquelle le boulon (5) peut être logé au moins partiellement sous l'effet de pression et est réalisé conique, cylindrique, rectangulaire ou polygonal.

3. Elément de fixation selon l'une ou l'autre des revendications 1 et 2, **caractérisé en ce que** le noyau intérieur (15) est réalisé cruciforme avec une région verticale (22) et une région horizontale (23), la région verticale (22) étant recouverte sur la face supérieure par une plaque (24) du corps principal (1) et se transformant sur la face inférieure dans le tourillon à expansion (16), et **en ce que** sur la région horizontale (23) se raccorde des deux côtés une des coques intérieures (10', 20') respectives de la zone de palier (3, 4).

4. Elément de fixation selon l'une ou plusieurs des revendications précédentes, **caractérisé en ce que** le boulon (5) est monté dans une ouverture (28) du corps principal (1), l'ouverture (28) et l'évidement (26) du tourillon à expansion (15) s'étendant de manière coaxiale.

5. Elément de fixation selon l'une ou plusieurs des revendications précédentes, **caractérisé en ce que** la coque extérieure (10, 20) de la zone de palier (3, 4) coiffe la coque intérieure (10', 20') respective par des surfaces de fermeture (30, 31 ; 30', 31').

6. Elément de fixation selon la revendication 5, **caractérisé en ce que** la coque intérieure (10', 20') est pourvue de profilages respectifs (35, 35') dans la région des tubes ou des câbles à maintenir.

7. Elément de fixation selon les revendications 5 et 6, **caractérisé en ce que** les coques intérieures (10', 20') sont situées des deux côtés dans le même plan du corps principal (1) ou dépassent celui-ci ou sont en retrait par rapport à celui-ci.

8. Elément de fixation selon la revendication 2, **caractérisé en ce que** le tourillon à expansion (16) est réalisé conique, cylindrique ou fendu.

9. Elément de fixation selon l'une ou plusieurs des revendications précédentes, **caractérisé en ce que** le tourillon à expansion (16) se transforme dans la région supérieure en une plaque de fermeture (33) avec un étranglement (34) agencé au-dessus.

10. Elément de fixation selon l'une ou plusieurs des revendications précédentes, **caractérisé en ce que** le boulon (5) est pourvu d'au moins un verrouillage (45).

11. Elément de fixation selon la revendication 10, **caractérisé en ce que** le verrouillage (45) est constitué par deux crochets (48, 49) opposés qui engagent par l'arrière la plaque (24) du corps principal (1) lorsque le boulon (5) est logé dans l'ouverture (40) conique fendue de l'élément à expansion (48).

12. Elément de fixation selon l'une ou plusieurs des revendications précédentes, **caractérisé en ce que** les deux composants de matériau peuvent être fabriqués au cours d'une opération dans un procédé à injection d'au moins deux composants.
